# EUROPÄISCHE PATENTSCHRIFT

(11) **EP 1 938 058 B1**
(45) Veröffentlichungstag und Bekanntmachung des Hinweises auf die Patenterteilung: **20.04.2016**
(21) Anmeldenummer: 06791382.2
(22) Anmeldetag: 14.09.2006
(51) Int. Cl.: G01G 21/28

(54) **WÄGEZELLE MIT AUFNAHMEHALTERUNG**
WEIGHING CELL WITH A RECEIVING HOLDER
CELLULE DE PESAGE AVEC SUPPORT DE RECEPTION

(30) Priorität: 12.10.2005 DE 102005048724; 12.10.2005 DE 202005015932 U
(43) Veröffentlichungstag der Anmeldung: 02.07.2008
(73) Patentinhaber: Wipotec Wiege- und Positioniersysteme GmbH, 67657 Kaiserslautern (DE)
(72) Erfinder: BURKART, Ralf, 67725 Börrstadt (DE)
(74) Vertreter: Eder, Thomas
(86) Internationale Anmeldenummer: PCT/DE2006/001613
(87) Internationale Veröffentlichungsnummer: WO 2007/041979

(56) Entgegenhaltungen:
- EP-A2- 0 825 425
- EP-A2- 1 400 789
- GB-A- 2 402 267
- US-A- 3 316 456
- US-A- 4 845 591
- US-B1- 6 566 613

## Beschreibung

Die vorliegende Erfindung betrifft eine Wägezelle und eine Halterung für die Aufnahme dieser Wägezelle.

Aus dem Stand der Technik ist bekannt, Wägezellen in Produktionsmaschinen zu integrieren, um die Wiegevorgänge zu beschleunigen und den apparativen Aufbau der Produktionsmaschine trotz Wiegevorgang zu vereinfachen. Bekannt sind hier insbesondere Anwendungen aus der Lebensmittel- oder Pharmabranche, bei denen abzufüllende oder zu verpackende Produkte innerhalb der entsprechenden Maschine auch abgewogen werden, um vorgegebene Gewichtswerte einzuhalten bzw. abweichende Füllmengen zu erkennen und gegebenenfalls auszusortieren.

Nachteiligerweise sind die in die Produktionsmaschinen integrierten wägetechnischen Komponenten oft schwer zugänglich, was sich bei Montage-, Wartungs- und Reinigungsarbeiten besonders deutlich zeigt. Entsprechend ist der Austausch von defekten oder aus sonstigen Gründen zu ersetzenden Wägezellen in diesem Fall schwierig. Gerade bei Mehrspuranwendungen, wo es auf möglichst geringen Spurabstand ankommt, ist die leichte Zugänglichkeit der Wägekomponenten jedoch erforderlich. Des Weiteren erfordert die schlechte Zugänglichkeit oft eine längere Stillstandszeit für Wartungs- oder Montagearbeiten und schlägt sich so insgesamt nachteilig auf den Produktionsprozess nieder.

Bekannt ist die Befestigung von Wägezellen mittels an diesen abgeordneten Adapterplatten. Dabei werden die Adapterplatten mit bzw. in der jeweiligen Maschine verschraubt. Dies kann mechanische Spannungen erzeugen, die auf die Wägezelle einwirken und ihre Funktion beeinträchtigen. Alternativ können Wägezellen unmittelbar und ohne Adäpterplatten befestigt werden, in dem geeignete (Gewinde-)Bohrungen an der Wägezellenunterseite verwendet werden. Auch hierbei können mechanische Spannungen auftreten, und die Herstellung der Bohrungen kostete Zeit und Geld.

Bei der Aufbringung der zu wiegenden Last auf die Lasteinleitung der Wägezelle sind Stöße in jeglicher Richtung zu vermeiden, um ein rasches Einschwingen des Messwertes nicht zu gefährden. Daher ist eine genaue räumliche Ausrichtung der Lasteinleitung relativ zu den aufzubringenden Lasten oder Lasttransportmitteln erforderlich.

Aus der EP 1 400 789 A2 ist eine elektrische Strom- und Signalverteilungseinheit bekannt, die in Verbindung mit Wägezellen einsetzbar ist. Eine zunächst ebene gedruckte Schaltung wird dabei auf einer zylinderförmigen Haltestruktur aufgebracht und bietet in Umfangsrichtung mehrere Schnittstellen zur Anbindung jeweils einer Platine einer zugehörigen Wägezelle. Jede Platine ragt dabei mit einem geeigneten Abschnitt in die auf der Haltestruktur angeordnete Steckbuchse hinein und kann durch einen oder mehrere Zentrierstifte dabei relativ zur Halterung zentriert werden.

Die US 6,566,613 B1 beschreibt eine Vorrichtung mit mehreren kreisförmig angeordneten Wägezellen. Die elektrische Anbindung der Wägezellen erfolgt ähnlich wie in der EP 1 400 789 A2. Besondere Hinweise auf die mechanische Ankopplung der Wägezellen an die gesamte Vorrichtung sind jedoch nicht offenbart.

Aus der EP 0 825 425 A2 ist eine Wägevorrichtung mit mehreren einzelnen Wägeeinheiten bekannt, die über geeignete Schnittstellen an eine gemeinsame Datenverarbeitung angeschlossen sind. Die einzelnen Wägezellen sind um eine zentrische Vibriereinrichtung angeordnet, wobei an der radialen Außenseite jeder Wägezelle ein Zuführ- und ein Wiegebehälter in geeignete Befestigungselemente der Wägezelle einhängbar ist.

Die US 4,845,591 beschreibt eine Vorrichtung zur Aufnahme einer elektronischen Ausrüstung, die über eine Steckverbindung mit einer zugehörigen Haltevorrichtung elektrisch verbindbar ist. Über Schnellspannverbindungen kann die elektronische Ausrüstung mit der Halterung verbunden werden.

Auch die US 3,316,456 A beschreibt eine Vorrichtung zur Aufnahme und elektrischen Anbindung einer elektrischen Ausrüstung, wobei wiederum eine Steckverbindung zwischen Halterung und der elektronischen Komponente die elektrische Verbindung herstellt. Auch hier kann die elektronische Komponente über eine Schnellspannverbindung relativ zur Halterung fixiert werden.

Aufgabe der Erfindung ist es daher, eine leicht austauschbare Wägezelle anzubieten, die exakt justiert, d.h. räumlich ausgerichtet werden kann.

Die Aufgabe wird gelöst durch eine Wägezelle gemäß Anspruch 1. Weitere vorteilhafte Ausführungsformen ergeben sich aus den Unteransprüchen.

Die Erfindung beruht auf der Idee, auf einfache Weise eine vollständige An- bzw. Abkopplung einer Wägezelle dadurch zu ermöglichen, dass die Wägezelle zur Herstellung einer lösbaren mechanischen und elektrischen Verbindung mit einer zugehörigen, komplementär dazu ausgebildeten Aufnahmehalterung geeignet sein soll, wobei die mechanische und elektrische Verbindung im wesentlichen gleichzeitig, jedenfalls aber im Rahmen des Einsetzvorganges bzw. Einspannens der Wägezelle in die bzw. Verriegelns der Wägezelle mit der Halterung hergestellt wird.

Unter "Wägezelle" ist im folgenden insbesondere ein Kraftmesssensor zur Ermittlung von Gewichtskräften (z.B. nach dem Prinzip der elektromagnetischen Kraftkompensation, der schwingenden Saite, des Dehnungsmessstreifens etc.) zu verstehen, der mit oder ohne Auswerteelektronik ausgestattet sein kann.

Erfindungsgemäß ist die Wägezelle zum Einsetzen in die zugehörige Aufnahmehalterung vorgesehen, wobei die Aufnahmehalterung zur dauerhaften Anordnung in einer für Wiegeaufgaben bestimmten Maschine vorsehbar ist. Dabei kann es sich insbesondere um eine Produktionsmaschine handeln, so dass die Aufnahmehalterung dort als "Dockingstation" anzuordnen wäre. Die zugehörige Wägezelle enthält erfindungsgemäß Ausrichtelemente, die komplementär zu Ausrichtelementen der Aufnahmehalterung ausgebildet sind. Dadurch wird sichergestellt, dass die Wägezelle beim Einsetzen in die Aufnahmehalterung eine exakt vorgebbare Lage relativ zur Aufnahmehalterung einnimmt und somit auch in der Produktionsmaschine als ganzes sehr genau ausgerichtet wird. Die Ausrichtelemente der Wägezelle bzw. der Aufnahmehalterung wirken in diesem Sinn zusammen und bestimmen dabei mechanisch die Lage der Wägezelle relativ zur Halterung und somit auch die Lage der Lasteinleitungselemente der Wägezelle relativ zur Maschine. Die Wägezelle an sich erstreckt sich dabei in eine erste horizontale Richtung X, eine dazu senkrechte zweite horizontale Richtung Y und eine zu beiden Richtungen X, Y senkrechte dritte Richtung Z.

Weiterhin sind zur Herstellung einer elektrischen Verbindung zwischen Wägezelle und Halterung an der Wägezelle und an der Aufnahmehalterung elektrische Kontakte vorgesehen, die beim Einsetzen der Wägezelle in die Halterung zusammenwirken und eine lösbare elektrische Verbindung herstellen. Über diese elektrische Verbindung, die bspw. zur Spannungsversorgung oder Signalübertragung verwendet werden kann, wird die Wägezelle beim Einsetzen in die Halterung vollständig an die Aufnahmehalterung angeschlossen, ohne separat solche Verbindungen herstellen zu müssen.

Die Wägezelle ist dadurch in erfinderischer Weise besonders einfach mit der Halterung verbindbar bzw. vollständig von ihr trennbar, in dem die Wägezelle in die Halterung eingesetzt bzw. aus ihr entnommen wird. Durch die kombinierte elektrische und mechanische Verbindung, die beim Einsetzen in die Halterung erreicht wird, ist die Wägezelle schnell und einfach und ohne zusätzliche Arbeiten (Verschrauben an Montageplatte, manuelles Herstellen einzelner elektrischer Verbindungen) betriebsbereit zu machen. Umgekehrt bewirkt die Entnahme der Wägezelle aus der Halterung ihre vollständige mechanische und elektrische Trennung von der Halterung und damit von der die Halterung aufnehmenden Produktionsmaschine bzw. Waage.

Eine vorteilhafte Ausführungsform der Erfindung sieht vor, dass die Wägezelle über eine Schnellspannverbindung mit der Halterung verbindbar ist. Die Vorrichtung soll eine schnelle, manuelle, gegen unbeabsichtigtes Lösen gesicherte Ankopplung der Wägezelle an die Halterung ermöglichen, ohne dass dazu besonderes Werkzeug erforderlich wäre - idealerweise überhaupt keines. Der Vorteil gegenüber dem Stand der Technik liegt hier darin, dass die Wägezelle besonders schnell und besonders einfach, idealerweise über ein einziges Schnellspannelement, genau und sicher mit der Aufnahmehalterung mechanisch und elektrisch verbindbar ist. Die sonst üblichen mehrfachen Verschraubungen der Wägezelle mit der Produktionsmaschine entfallen. Vorteilhafterweise entfallen mit den Mehrfach-Verschraubungen auch mögliche mechanische Spannungen, die eben durch solche mehrfachen Verschraubungen in die Wägezelle selbst eingebracht werden können und das Messergebnis verfälschen. Ein besonderes einfacher Fall der Schnellspannverbindung ist durch eine manuell betätigbare Spannschraube gegeben, welche die Wägezelle und die Halterung im eingesetzten Zustand gegeneinander verspannt. Auch ein ggfls. federbelasteter lösbarer Rastmechanismus, der die Wägezelle mit der Halterung stabil und sicher verbindet und dabei einfach und ohne Werkzeug zu bedienen ist, erfüllt diesen Zweck.

Durch die vorgesehenen Ausrichtelemente, die die Position der Wägezelle innerhalb der Aufnahmehalterung exakt bestimmen, ist ein zusätzliches Ausrichten der Wägezelle relativ zur Produktionsmaschine nicht mehr nötig. Die Wägezelle nimmt automatisch die vorgesehene Position ein und wird in dieser durch die Schnellspannverbindung sicher und genau gehalten.

Ein weiterer Vorteil der wenigstens einen Schnellspannverbindung liegt darin, dass das Einsetzen oder die Entnahme der Wägezelle im Wesentlichen durch eine zweidimensionale Bewegung durchführbar ist, während in Richtung der dritten Dimension weitere Wägezellen angeordnet sein können. Insbesondere bei mehrspurigen Systemen können so die Wägezellen im Sinne eines Einschubs eingesetzt bzw. entnommen werden, ohne die seitlich benachbarten Wägezellen dafür entfernen zu müssen. Die Schnellspannvorrichtung kann in diesem Fall an der Stirnseite der Wägezelle angeordnet sein, während zu beiden Seiten der Wägezelle keinerlei Befestigungsvorrichtungen vorgesehen sind, so dass die Wägezelle seitlich sogar bündig an weitere Wägezellen angrenzen kann.

Ein weiterer Vorteil der vorgenannten Erfindung liegt darin, dass durch einmalige und exakte Justierung der in der Produktionsmaschine angeordneten Aufnahmehalterung keine weiteren Justiervörgänge nötig sind, wenn in die Aufnahmehalterung eine oder auch nacheinander verschiedene Wägezellen eingesetzt werden. Diese justieren sich anhand der Ausrichtelemente automatisch exakt in die gewünschte Position. Eine Justierung der Wägezelle an sich nach dem Einsetzen ist somit nicht mehr erforderlich. Dies spart Zeit und ermöglicht die bessere Auslastung der Wägezelle bzw. der gesamten Produktionsmaschine. (Unter "Justieren" ist vorliegend das exakte Ausrichten nach Lage und Position im Raum zu verstehen, nicht der Abgleich zwischen einem gemessenen und einem angezeigten Gewichtswert).

Erfindungsgemäß lassen sich auch unterschiedliche Wägezellentypen in die Aufnahmehalterung einsetzen, solange die jeweiligen Ausrichtelemente von Wägezelle und Aufnahmehalterung komplementär, also passend zueinander ausgebildet sind. Insbesondere lassen sich also Wägezellen für verschiedene Wägeaufgaben bzw. -bereiche besonders leicht gegeneinander auswechseln und erlauben so den Einsatz der Produktionsmaschine für unterschiedliche Wägeaufgaben binnen kürzester Zeit.

Die Erfindung sieht weiterhin vor, dass die Ausrichtelemente der Wägezelle und der Aufnahmehalterung in Richtung X verlaufende, komplementär zueinander ausgebildete Führungselemente aufweisen, um die Wägezelle beim Einsetzen in die Aufnahmehalterung gegen ein Verdrehen und/oder seitliches Verschieben quer zur Richtung X zu sichern. Diese Führungselemente stellen erfindungsgemäß sicher, dass die Wägezelle zumindest in eine erste Richtung geführt wird bzw. ein Verschieben quer zu dieser Richtung nicht möglich ist. Dabei kann es sich insbesondere um eine Nut- und Federkonstruktion oder generell eine Vertiefung mit komplementär dazu ausgebildeter Erhöhung an Wägezelle bzw. Aufnahmehalterung handeln, wobei das sich ergebende Profil entsprechend zusammenwirkt. Denkbar ist insbesondere eine breite Führungsnut (Vertiefung) an der Unterseite der Wägezelle, während die zugehörige Aufnahmehalterung eine entsprechende Erhöhung an ihrer Oberseite aufweist (Formschluss). Solche Führungselemente erleichtern das Einsetzen der Wägezelle erheblich und können - je nach vorgebbaren Bearbeitungstoleranzen - eine exakte Positionierung der Wägezelle relativ zur Aufnahmehalterung im Bereich von hundertstel Millimetern gewährleisten.

Die Führungselemente bewirken weiterhin ein vereinfachtes Einsetzen der Wägezelle dann, wenn diese quasi als Einschub auf die Aufnahmehalterung aufgesetzt werden soll. Erstreckt sich die Wägezelle im Wesentlichen in eine Längsrichtung X, die gleichzeitig die Einschubrichtung darstellt, so würden die ebenfalls in die Richtung X ausgerichteten Führungselemente die Wägezelle bereits während des Einsetzvorganges automatisch ausrichten und ein Verdrehen und/oder seitliches Verschieben quer zur Richtung X verhindern.

Die Erfindung sieht vor, dass die Ausrichtelemente der Wägezelle jeweils wenigstens ein Anschlagmittel umfassen, welches im eingesetzten Zustand mit wenigstens einem dazu komplementär ausgebildeten Anschlagmittel der Ausrichtelemente der Aufnahmehalterung zusammenwirkt, um die Lage der Wägezelle relativ zur Aufnahmehalterung in Richtung X und Z festzulegen. Dieses Anschlagmittel sorgt erfindungsgemäß dafür, dass die Wägezelle in Richtung X bzw. Z eine exakt vorgebbare Relativposition gegenüber der Aufnahmehalterung einnimmt. Als in Richtung Z wirkendes Anschlagmittel ist beispielsweise eine zur Wägezelle hinweisende Oberfläche der Aufnahmehalterung denkbar, auf welcher die Wägezelle in eingesetztem Zustand ruht. Ein in X-Richtung wirkender Anschlag kann beispielsweise durch einen sich in Z-Richtung erstreckenden Vorsprung gebildet werden, der mit einer entsprechenden Komplementärfläche der Wägezelle zusammenwirkt.

Durch die vorgenannten Mittel kann die Wägezelle zunächst vorpositioniert werden, indem sie so in die Aufnahmehalterung eingesetzt wird, dass zunächst die in Richtung X verlaufenden Führungselemente ein seitliches Verschieben quer dazu verhindern und ein Verschieben der Wägezelle in Richtung X zulassen bzw. unterstützen. Dabei kann die Wägezelle erfindungsgemäß auf einer Kontaktfläche der Aufnahmehalterung aufliegen, die dabei als in Z-Richtung wirkender Anschlag fungiert.

Beim weiteren Verschieben der Wägezelle in Richtung X (vorliegend ist unter einer Richtung stets auch die Gegenrichtung zu verstehen, sofern nichts anderes beschrieben ist) gelangt die Wägezelle schließlich an den als Anschlag in X-Richtung fungierenden Vorsprung, und ist somit in ihrer Lage relativ zur Aufnahmehalterung in allen drei Richtungen des Raumes definiert.

Ergänzend zu den vorbeschriebenen Mitteln sieht eine weitere vorteilhafte Ausführungsform der Erfindung an der Wägezelle wenigstens ein Zentriermittel vor, welches in eingesetztem Zustand mit einem dazu komplementär ausgebildeten Zentriermittel der Aufnahmehalterung zusammenwirkt. Dadurch wird die Lage der Wägezelle relativ zur Aufnahmehalterung in wenigstens zwei Richtungen des Raumes festgelegt, wodurch eine zusätzliche Positioniersicherheit bzw. -stabilität erreicht wird. Bei dem Zentriermittel kann es sich insbesondere um eine Zapfen-Buchsenkonstruktion handeln, bei der ein gegebenenfalls konisch geformter Zapfen der Wägezelle beim Einsetzen in die Aufnahmehalterung in eine dort angeordnete und komplementär dazu ausgebildete Buchse hineinragt. Die gegebenenfalls konisch geformte Zentrierfläche des Zentrierstiftes und die komplementär dazu geformte Wandung der wenigstens einen Buchse sorgt dadurch für eine genau vorgebbare Ausrichtung der Wägezelle relativ zur Aufnahmehalterung.

Denkbar ist insbesondere eine solche Anordnung, bei der die Zentriermittel bei einer Vorschubbewegung der Wägezelle in Richtung X in Richtung auf den in X-Richtung wirkenden Anschlag bewegt werden und dabei in die vorbeschriebene Buchse oder Buchsen wenigstens teilweise eingreifen. Besonders einfach kann die Zentrierbuchse in dem Vorsprung ausgebildet werden, der den in X-Richtung wirkenden Anschlag darstellt.

Eine besonders einfache Form der Zapfenkonstruktion kann gleichzeitig als Zentriermittel im Bezug auf alle drei Richtungen des Raumes wirken. Dabei ragt ein konisch geformter Zapfen der Wägezelle (oder der Halterung) mit seiner Kegelmantelfläche in eine zylindrische Ausnehmung (Bohrung) der Halterung (oder der Wägezelle) und definiert eine genaue Lage von Wägezelle und Halterung zueinander, wenn der Zapfen soweit in die Bohrung eingeschoben wird, dass die Mantelfläche über den gesamten Umfang oder wenigsten entlang einer Berührungslinie an der Bohrung anliegt und/oder der zunehmende Durchmesser des Kegels ein weiteres Einschieben in die Bohrung verhindert. Dadurch ist eine Fixierung der Wägezelle relativ zur Halterung in allen drei Richtungen des Raumes erreicht.

Die Schnellspannvorrichtung kann vorteilhafterweise so ausgebildet sein, dass sie zur Ausbildung einer Spannkraft zwischen Wägezelle und Aufnahmehalterung in gleichzeitig wenigstens zwei der Richtungen X, Y und Z vorgesehen ist. Dadurch wird die Wägezelle in diesen Richtungen gegen die Halterung vorgespannt. Eine solche mehrdimensionale Spannwirkung hat zur Folge, dass die Wägezelle besonders sicher auf der Aufnahmehalterung ruht und insbesondere gegen mehrere senkrecht zueinander wirkende Anschläge gedrückt werden kann. Denkbar ist insbesondere der Fall, dass die Schnellspannvorrichtung in Form einer an der Halterung (bzw. an der Wägezelle) angebrachten schwenkbaren Arretierschraube ausgebildet ist, welche auf eine um bspw. 45 Grad geneigte Fläche am Gehäuse der Wägezelle (bzw. an der Halterung) drückt, wenn die Arretierschraube angezogen wird. Durch die geneigte Fläche werden Spannkräfte in die horizontale bzw. vertikale Komponente der Flächenneigung eingebracht. Wie in der Figurendarstellung zu sehen sein wird, kann durch dieses einfache Schnellspannmittel eine Vorspannung bspw. in Z-Richtung gegen die Aufnahmehalterung und des Weiteren auch bspw. in X-Richtung gegen einen Anschlag der Aufnahmehalterung erzeugt werden. Die Wägezelle sitzt dadurch besonders sicher in der Aufnahmehalterung.

Eine vorteilhafte Ausführungsform der Wägezelle in Verbindung mit der Aufnahmehalterung befasst sich mit wenigstens einem elektrischen Steckkontakt der Wägezelle zur Übertragung von Versorgungsspannung und/oder Signalen. Dieser Steckkontakt soll erfindungsgemäß beim Einsetzen in die Halterung mit einem dort komplementär ausgebildeten Steckkontakt verbindbar sein. Dadurch wird vorteilhaft sichergestellt, dass durch das mechanische Einsetzen der Wägezelle in die Aufnahmehalterung zugleich der elektrische Kontakt zwischen Wägezelle und Halterung zustande kommt, um beispielsweise Versorgungsspannung für die Wägezelle bereit zu stellen oder Messdaten abzugreifen, bspw. um sie an eine externe Steuerung oder Anzeige zu übertragen. Weiterhin wird bei Entnahme der Wägezelle aus der Halterung automatisch auch die Steckverbindung wieder gelöst, so dass mit wenigen Handgriffen (Lösen der Schnellspannverbindung, Herausziehen der Wägezelle aus der Halterung) die Wägezelle vollständig entkoppelt ist und unmittelbar durch eine andere Wägezelle austauschbar ist. Insbesondere sind unterschiedliche Steckkontakte denkbar (für Spannungsversorgung, Signalübertragung etc.) die gleichzeitig mit komplementären Steckkontakten an der Wägezelle respektive der Halterung zusammenwirken. Wartungs- und Austauscharbeiten werden auf diese Weise erheblich beschleunigt, da keine separaten Kabelverbindungen zwischen Wägezelle und Halterung bzw. Produktionsmaschine zu lösen bzw. herzustellen sind. Der Einsatz von Federkontakten für die Steckverbindungen erlaubt dabei eine besonders zuverlässige elektrische Verbindung

Durch die eindeutig vorgegebene Festanordnung der Steckverbindungen wird auch das versehentlich schräge und/oder verdrehte Aufstecken von Steckern bzw. die fehlerhafte Polung oder gar ein Kurzschluss durch falsches Herstellen der Steckverbindung sicher ausgeschlossen.

Um die vorgenannte wenigstens eine Steckverbindung möglichst gut vor äußeren Einflüssen zu schützen, sieht eine vorteilhafte Ausführungsform der Erfindung vor, dass der Kontakt im eingesetzten Zustand der Wägezelle in die Halterung vollständig von Wägezelle und Aufnahmehalterung umschlossen wird. Dabei bilden Wägezelle und Halterung insgesamt ein Gehäuse, welches die Steckverbindung vollständig und schützend umschließt. Des Weiteren wird durch die definiert vorgegebene Lage der Steckverbindung ein ungünstiger Kabelabgang von der Wägezelle vermieden, der in der Praxis oft dort liegt, wo der Anwender in seiner Maschine keinen entsprechenden Platz vorgesehen hat. Die elektrische Anbindung der Wägezelle kann vorteilhaft ausschließlich über die vorgenannte Steckverbindung erfolgen, wodurch die entsprechenden Kabelverbindungen eingespart werden und mögliche Verbindungsprobleme durch geschädigte oder gelockerte Kabel von vornherein umgangen werden, da dann beim Ein- und Ausbau der Zelle in die bzw. aus der Halterung eine Bewegung von Kabeln oder Kabelenden nicht erfolgt.

Eine Weiterbildung der Erfindung sieht vor, dass eine Schutzvorrichtung für mit der Wägezelle verbindbare elektrische Kontakte bzw. Steckverbindungen der Aufnahmehalterung bzw. der Wägezelle vorgesehen ist, die bei Entnahme der Wägezelle die Kontakte an der Halterung und/oder der Wägezelle selbsttätig gegen Verschmutzung sichert. Eine solche Schutzvorrichtung kann mechanisch, elektrisch, elektromechanisch, pneumatisch oder in sonstiger Weise ausgebildet sein. Vorteilhaft ist insbesondere ein einfacher federbelasteter Mechanismus, der beim Einsetzen der Wägezelle in die Halterung eine die Steckkontakte schützende Abdeckung wegklappt, um die Verbindung zu ermöglichen. Wird die Wägezelle wieder aus der Aufnahmehalterung entfernt, klappt die Abdeckung zum Schutz wieder vor die Kontakte zurück und dichtet diese Kontakte gegen Schmutz, Feuchtigkeit, aggressive Reinigungsmittel oder sonstige, die Sicherheit der Wägezelle oder des Personals gefährdende Kontaktierungen oder Berührungen ab.

Im Hinblick auf die vorgenannten Steckverbindungen ist eine weitere vorteilhafte Ausführungsform der Erfindung dahingehend ausgebildet, dass eine mit der Wägezelle zusammenwirkende elektrische oder mechanische Verriegelungsvorrichtung vorgesehen ist, um vorgebbare, über die Aufnahmehalterung mit der Wägezelle verbindbare elektrische Kontakte erst dann einzuschalten, wenn die Wägezelle in die Halterung eingesetzt und/oder ein anderer vorgebbarer elektrischer, mechanischer und/oder elektromechanischer Kontakt zwischen Wägezelle und Halterung zustande gekommen ist. Dadurch wird quasi eine Schaltreihenfolge sichergestellt, so dass sensible oder Hochspannung führende Steckverbindungen erst dann mit Spannung bzw. Signalen beaufschlagt werden, wenn die Wägezelle weitgehend oder vollständig in die Halterung eingesetzt ist. Eine solche Freischaltung lässt sich alternativ auch durch einen elektrischen Kontakt, insbesondere Federkontakt, realisieren, der zwischen Wägezelle und Halterung zustande kommen muss, um eine dazu in Serie geschaltete oder dadurch durch eine Steuereinheit gezielt beschaltete weitere Steckverbindung zu beschalten. Denkbar ist es insbesondere, während des Einsetzens bzw. Herausnehmens der Wägezelle aus der Aufnahmehalterung nacheinander verschiedene Steckverbindungen herzustellen oder zu lösen bzw. Schaltmechanismen zu betätigen, um nachgeordnete Steckverbindungen davon abhängig zu beschalten.

Abgesehen von dieser überwiegend mechanischen Variante ist auch die Beschaltung bestimmter Kontakte über Relais bzw. eine (ggfls. auch entfernt angeordnete) Steuerung denkbar, wenn vorgebbare andere Kontakte während des Einsetzens der Wägezelle in die Halterung geschlossen bzw. betätigt werden. Im Ergebnis wird dadurch sichergestellt, dass bestimmte Komponenten der Wägezelle (oder auch der Aufnahmehalterung) nur unter definierten Bedingungen bzw. sichergestellten elektrischen Verbindungen beschaltet werden. So ist ein ungewollter Betrieb von Motoren oder andere Transport- oder Stellorganen bzw. die ungewollte Spannungsführung an Komponenten oder Kontakten gut zu vermeiden.

In diesem Zusammenhang sieht eine weitere Ausführungsform der Erfindung vor, dass Wägezelle und zugehörige Aufnahmehalterung so ausgebildet sind, dass beim Einsetzen zwangsweise zunächst eine mechanische Verbindung (zumindest im Bezug auf eine erste Richtung) hergestellt wird, bevor ein erster bzw. ein frei vorgebbarer elektrischer, mechanischer oder elektromechanischer Kontakt zwischen Wägezelle und Halterung zustande kommt. Für Explosionsschutzzwecke kann die mechanische Verbindung dabei bereits so stabil ausgeführt sein, dass beim Zustandekommen eines zeitlich nachfolgenden elektrischen Kontakts mit evtl. daraus folgender Zündung eines explosionsfähigen Gemisches der Explosionsdruck von Wägezelle mit verbundener Halterung sicher aufgenommen wird. Weiterhin kann die mechanische Verbindung so ausgebildet sein, dass die mögliche Explosionszone zwischen Wägezelle und Halterung bereits soweit abgedichtet ist, dass die Verbindungsbereiche flammendurchschlagsicher sind und die Ausbreitung der Explosion auf die Außenseite der Anordnung Wägezelle/Aufnahmehalterung unterbunden wird. Natürlich kann für den Ausbau der Wägezelle, also deren Trennung von der Halterung, die entsprechende Funktionsumkehr vorgesehen sein, so dass alle oder zumindest relevante elektrische Kontakte getrennt werden, bevor sich die explosionsschützende mechanische Verbindung löst.

Beispielsweise kann eine solche mechanische Verbindung als Schwalbenschwanzverbindung hergestellt werden. Enge Fügetoleranzen oder komplementär labyrinthartige Flächen an den aneinanderliegenden Berührungsbereichen von Wägezelle und Halterung können den Flammendurchschlag verhindern.

Eine weitere vorteilhafte Ausführungsform der Erfindung sieht vor, dass die Wägezelle zum Schutz vor gegenseitigen elektromagnetischen Einflüssen wenigstens einen weitgehend hermetisch getrennten Bereich bzw. Raum aufweist, der im Wesentlichen zur Aufnahme der Wägezellenelektronik vorgesehen ist. Durch diese Ausbildung von elektromagnetisch bestmöglich isolierten Räumen wird eine Beeinflussung insbesondere der Wägezellenelektronik durch äußere Einflüsse vermieden. Der elektromagnetische Schutz besteht dabei einerseits vorteilhaft zu den mechanischen Komponenten der Wägezelle hin, die angrenzend zu dem geschützten Raum angeordnet sein können. Alternativ bzw. ergänzend ist auch ein Schutz gegeben vor elektromagnetischer Einstrahlung aus dem Bereich der angrenzenden Aufnahmehalterung, wenn die Wägezelle dort eingesetzt ist.

Insbesondere in Verbindung mit der Aufnahmehalterung zeigt sich ein weiterer Vorteil der Abschirmung. Sofern in den elektrischen Zuleitungen zur Aufnahmehalterung Filter vorzusehen sind, um elektromagnetische Störeinflüsse, etwa durch Hochfrequenz-Signale (HF) auf die Kabel zu reduzieren oder zu vermeiden, so reicht diese Maßnahme auch für unterschiedliche, in die Halterung einsetzbare Wägezellen aus, ohne jede dieser Wägezellen ebenfalls durch entsprechende Filter schützen zur müssen. Da die Wägezellen an sich durch die genannte Ausführung der Räume der Wägezelle bereits gegen elektromagnetische äußere Einflüsse geschützt sind, genügt eine Filtervorrichtung an der Aufnahmehalterung zum elektromagnetischen Schutz jeder der Kombinationen Wägezelle/ Aufnahmehalterung. Dadurch wird ein besonders sicherer Betrieb der Kombination von Wägezelle und Aufnahmehalterung möglich. Gleichzeitig dient die auf die Halterung aufgesetzte Wägezelle mit ihren elektromagnetisch geschützten Räumen auch als Abschirmung der Steckkontakte, die - wie vorbeschrieben - von der zusammengesetzten Einheit umschlossen werden. Besondere Schutzmaßnahmen bzw. EMVgerechte Steckverbindungen gegen beispielsweise leitungsgeführte HF-Signale werden in der Wägezelle und/oder der Aufnahmehalterung selbst dadurch überflüssig.

Die vorgenannte beschriebene Trennung der Räume der Wägezelte kann ergänzend oder alternativ auch in thermischer Hinsicht ausgebildet sein, so dass eine Wärmeleitung oder Wärmeströmung von einem Raum in den anderen weitgehend vermieden wird. Dies wird insbesondere gewählt, um die im Bereich der Wägezellenelektronik entstehende Betriebswärme von den mechanischen und sehr empfindlichen Komponenten der Wägezelle fernzuhalten, um das Messergebnis nicht zu verfälschen.

Der hermetisch getrennte Bereich bzw. Raum kann auch als explosionsgeschützter Raum ausgebildet sein.

Eine weitere vorteilhafte Ausführungsform der Erfindung sieht vor, dass die Aufnahmehalterung einen elektrischen Anschlussraum zur Anordnung von elektrischen oder elektronischen Komponenten aufweist. Insbesondere können in diesem Raum Schaltelemente untergebracht sein, die die gezielte Freischaltung der Steckkontakte zwischen Wägezelle und Aufnahmehalterung sicherstellen, was beispielsweise mittels Relais geschehen kann. Alternativ oder ergänzend ist ein solcher Raum jedoch auch zur Aufnahme von Wägezellenelektronik geeignet. Bspw. kann die eigentliche Wägezelle im Wesentlichen die mechanischen Komponenten umfassen. Der gegebenenfalls an einer Kompensationsspule aufgenommene Strom bzw. ein entsprechendes Signal wird dann über einen Steckkontakt an die Aufnahmehalterung und in den dortigen Anschlussraum weitergeleitet, um erst dort die weitere Aufbereitung des Wägezellensignals vorzunehmen. Auch zusätzliche Steuerungskomponenten mit Rechenleistung (CPU), elektronische Komponenten für Kommunikations- bzw. Netzwerkzwecke, Ein-/Ausgabekanäle sowie Steuerungen für weitere, wiegeunabhängige Aufgaben der Maschine (speicherprogrammierbare Steuerung) können erfindungsgemäß dort untergebracht werden.

Diese räumliche und gegenständliche Trennung von mechanischen Komponenten in der Wägezelle einerseits und zugehörigen elektronischen Komponenten in der Aufnahmehalterung andererseits erlaubt eine platzsparende Ausbildung der Wägezelle und reduziert gegebenenfalls die Anzahl der erforderlichen Steckverbindungen zwischen Wägezelle und Aufnahmehalterung und unterstützt einen möglichen modularen Aufbau der Wägezelle bzw. der Kombination Wägezelle/Aufnahmehalterung. Des Weiteren ist die Elektronik in dem Anschlussraum der Aufnahmehalterung dauerhaft und gut geschützt und lässt sich auch in elektromagnetischer Hinsicht gut von den darüber angeordneten mechanischen Komponenten der Waage oder sonstigen Bauteilen der Produktionsmaschine trennen.

Eine weitere vorteilhafte Ausführungsform der Erfindung sieht vor, dass Mittel zur gegenseitigen Eichverriegelung zwischen Wägezelle und Aufnahmehalterung vorgesehen sind. Zum Schutz vor bzw. als Erkennungsmerkmal von unerlaubter Veränderung der Wägezelle (oder in der Wägezelle hinterlegten Daten oder Programmteile) können zum Beispiel Aufkleber oder Plomben vorgesehen werden, die eine Änderung leicht erkennbar machen und insbesondere auch einen unbefugten Austausch der in der Halterung angeordneten Wägezelle gegen eine andere eindeutig dokumentieren. Die Mittel zur Eichentriegelung können von der Wägezelle und/oder der Aufnahmehalterung für die Wägezelle umfasst sein.

Als Mittel zur Eichverriegelung kommen solche in Frage, die eichrelevante Daten der Wägezelle gegen Veränderung sichern. Das kann auch durch Auslagern der Wägezellendaten in spezielle Speicher innerhalb der Aufnahmehalterung geschehen, die dort gegen Veränderung geschützt sind. Gleichzeitig oder alternativ können Mittel vorgesehen sein, die die Veränderung einer bestimmten, eichtechnisch überprüften Kombination einer Halterung mit einer bestimmten Wägezelle verhindern oder dokumentieren. Der unbefugte Austausch einer Wägezelle gegen eine andere ist dann nicht unbemerkt möglich.

Alternativ zu "hardware"-artigen Sicherungsmechanismen, die in beengten Bauräumen und bei schlechten Sichtverhältnissen nur schwer zu kontrollieren bzw. anzubringen sind, kann insbesondere auch eine elektronische eichtechnische Lösung vorgesehen werden im Sinne einer "software"-artigen Sicherung. Dabei kann es sich beispielsweise um einen elektronischen Eichzähler handeln, der bei einer Änderung der Eichdaten einen gespeicherten Zählwert ("Audit-Trail-Zahl") automatisch und nicht rücksetzbar ändert und damit eine (ggfls. auch unzulässige) Änderung der Eichdaten dokumentiert. Auch die (mechanische) Auswechselung einer Wägezelle gegen eine andere würde dabei als Eingriff in die Eichdaten registiert und entsprechend dokumentiert werden.

Die Mittel zur Dokumentation eines solchen (auch unbefugten) Eingriffs in die Eichdaten können dabei entweder in der Halterung oder auch in der Wägezelle angeordnet sein. Insbesondere ist es möglich, systemrelevante Parameter der Wägezelle in einer geeigneten Steuerung bzw. in in der Halterung angeordneten elektrischen Speichern festzuhalten.

Grundsätzlich kann eine der vorgenannten eichtechnischen Verriegelungen auch unabhängig von der Wägezelle mit Aufnahmehalterung, also auch für andere Waagen, Verwendung finden.

Neben den vorgenannten Vorteilen der Erfindung ist darauf hinzuweisen, dass Wägezelle und Aufnahmehalterung separat hergestellt werden können und unterschiedliche Kombinationen von Wägezellen mit stets passenden Aufnahmehalterungen möglich sind. Durch die integrierbaren Steckverbindungen sind keine freien Kabelenden oder ansonsten anfällige Steckverbindungen mehr in der Wägeanlage vorgesehen. Insbesondere wird durch die Ausrichtelemente bzw. Anschläge eine sehr gute Ausrichtung bzw. Befestigung der Wägezelle an der Aufnahmehalterung sichergestellt, ohne dass eine Vielzahl außen liegender Schrauben oder andere Befestigungskomponenten am Gehäuse der Wägezelle oder der Aufnahmehalterung vorzusehen sind. Durch die wenigstens eine Schnellspannverbindung ist die Anzahl der erforderlichen Befestigungsmittel auf ein Minimum reduziert, die Komponenten können leicht und sicher miteinander verbunden werden und bieten wenig Raum bzw. Angriffspunkte gegen Wasser, Schmutz etc. Durch die besonders leicht abnehmbare Wägezelle ist auch die Reinigung sehr einfach. Die leichte Trennbarkeit von Wägezelle und Halterung erlaubt es auch in einfacher Weise, vorrübergehend eine erste Wägezelle aus der Halterung zu entnehmen und durch eine zweite zu ersetzen. Der Wägebetrieb kann dann ohne nennenswerte Unterbrechung fortgeführt werden, während die erste Wägezelle in einer externen Station bspw. qualitätssichernden Funktionstests unterworfen werden kann.

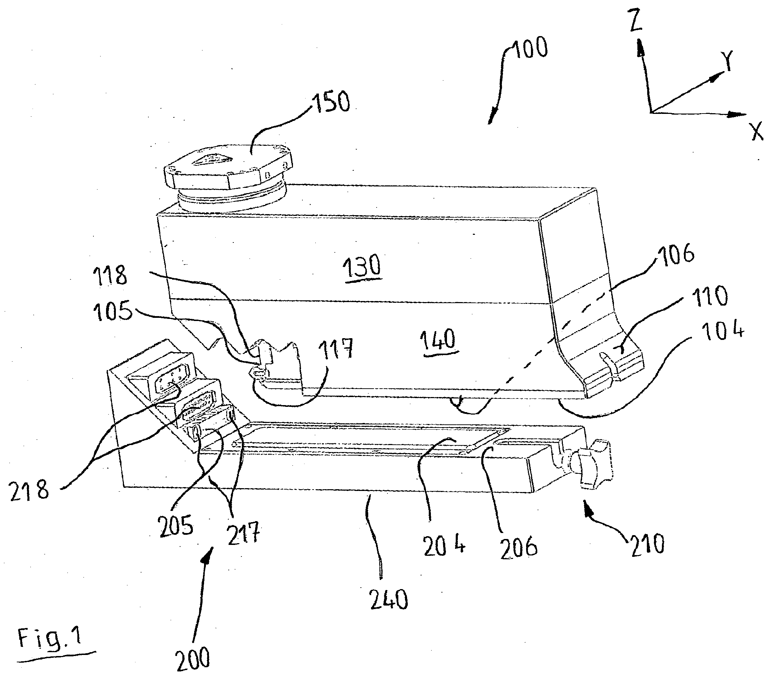

Nachfolgend wird anhand eines Figurenbeispiels eine Ausführungsform näher erläutert. Die einzige Figur 1 zeigt dabei eine perspektivische Ansicht einer Wägezelle mit zugehöriger Aufnahmehalterung.

In Figur 1 ist in perspektivischer und schematischer Ansicht eine Kombination aus Wägezelle mit passender Aufnahmehalterung dargestellt.

Im oberen Teil der Figur 1 ist eine Wägezelle 100 angeordnet, an deren Lasteinleitung 150 eine zu messende Gewichtskraft einleitbar ist. Die Wägezelle 100 weist zwei voneinander hermetisch getrennte Räume 130 und 140 auf, wobei in Raum 130 vorwiegend mechanische Kraftübersetzungselemente der Wägezelle angeordnet sind, während im unteren Raum 140 die Wägezellenelektronik angeordnet sein soll. Insbesondere der Raum 140 ist gegen elektromagnetische Einwirkungen von außen besonders abgeschirmt, um Störungen der Elektronik weitgehend zu vermeiden.

Im unteren Bereich der Wägezelle 100 bzw. an deren Unterseite sind Ausrichtelemente 104, 105, 106 vorgesehen, um die Wägezelle 100 relativ zu der unterhalb der Wägezelle dargestellten Aufnahmehalterung 200 positionieren zu können. Das Ausrichtelement 104 ist als (in Fig. 1 nicht sichtbare) Führungsnut an der Unterseite der Wägezelle ausgebildet, wobei diese Führungsnut von einer komplementär dazu ausgebildeten Erhebung 204 der Aufnahmehalterung 200 ausgefüllt werden kann, wenn die Wägezelle auf die Halterung aufgesetzt wird.

Als weiteres Ausrichtelement sieht die Wägezelle an ihrer Unterseite eine im Wesentlichen plane Anschlagfläche 106 vor (diese wird in Fig. 1 durch den Körper der Wägezelle 100 perspektivisch verdeckt und ist der darunter angeordneten Halterung 200 unmittelbar zugewandt). Die Anschlagfläche 106 wirkt mit einer entsprechenden Gegenfläche 206 der Aufnahmehalterung 200 zusammen und definiert die Position der Wägezellen 100 relativ zur Aufnahmehalterung 200 in Richtung Z.

Ein weiteres Ausrichtelement der Wägezelle 100 ist als in X-Richtung wirkende Anschlagfläche 105 ausgebildet, die mit einer entsprechenden Gegenfläche 205 der Aufnahmehalterung 200 zusammenwirkt und die Relativposition der Wägezelle 100 gegenüber der Halterung 200 im eingesetzten Zustand in Richtung X definiert.

Eine besondere Festlegung der Relativposition der Wägezelle 100 gegenüber der Halterung 200 in Y-Richtung wird durch zwei Zentrierstifte 117 erreicht, die im eingesetzten Zustand in zwei dazu komplementär ausgebildete Ausnehmungen 217 der Aufnahmehalterung 200 hineinragen und so ein Verschieben der Wägezelle 100 relativ zur Aufnahmehalterung 200 in Y-Richtung zuverlässig verhindern. Die Zentrierstifte 117 weisen eine konische Fläche auf, die mit entsprechenden Komplementärflächen der Ausnehmungen 217 zusammenwirken und eine exakte Positionierung der Wägezelle ermöglichen.

Im eingesetzten Zustand ist die Wägezelle 100 mit der Aufnahmehalterung 200 über eine Schnellspannvorrichtung 210 lösbar verbindbar. Die Schnellspannverbindung 210 weist eine in der Aufnahmehalterung 200 schwenkbar gelagerte Arretierschraube auf, welche im eingesetzten Zustand der Wägezelle 100 um ein Maß in Richtung auf die Wägezelle 100 verschwenkbar ist und dabei einen in der Wägezelle vorgesehenen Schlitz durchdringt. Am oberen Ende des Schlitzes ist eine um etwa 45 Grad zur Horizontalen geneigte Anschlagfläche 110 vorgesehen, gegen welche die Spannschraube im eingesetzten Zustand der Wägezelle verspannbar ist. Durch diese Spannschraubenvorrichtung wird die Wägezelle 100 im eingesetzten Zustand sowohl in Richtung auf den Anschlag 205 als auch in Richtung auf den Anschlag 206 gedrückt, wodurch die Relativposition zwischen Wägezelle 100 und Aufnahmehalterung 200 erzwungen beibehalten wird.

Weiterhin vorgesehen sind Steckverbindungen zwischen Wägezelle 100 und Aufnahmehalterung 200, wobei (in Fig. 1 vom Körper der Wägezelle 100 perspektivisch verdeckte) Steckkontakte 118 der Wägezelle 100 mit komplementär dazu ausgebildeten Kontakten 218 der Aufnahmehalterung zusammenwirken und im eingesetzten Zustand der Wägezelle 100 in die Aufnahmehalterung 200 eine Verbindung zwischen den Kontakten 118 und 218 herstellen. Die Steckkontakte 118, 218 werden im zusammengesetzten Zustand von Wägezelle 100 und Aufnahmehalterung 200 vollständig umgeben und sind so gegen äußere Einflüsse wie Verschmutzung oder Berührung zuverlässig geschützt. Der Raum 140 der Wägezelle 100, der gegen elektromagnetische äußere Einflüsse besonders geschützt ist, stülpt sich im eingesetzten Zustand zumindest teilweise über die Steckkontakte 118, 218 und sorgt so zusätzlich für eine-elektromagnetische Abschirmung dieser Kontakte.

Schließlich ist in der Aufnahmehalterung 200 ein Raum 240 ausgebildet, der zur Aufnahme weiterer Elektronik ausgebildet ist. Dabei kann es sich um Wägezellenelektronik handeln oder auch um Sicherheitsschaltungen, die eine Beschaltung einzelner Steckkontakte erst nach dem Zustandekommen anderer Kontakte oder nach der Betätigung bestimmter Sicherheitsschalter zulassen. Auch zusätzliche Steuerungskomponenten mit Rechenleistung (CPU), elektronische Komponenten für Kommunikations- bzw. Netzwerkzwecke oder Ein-/Ausgabekanäle, sowie Steuerungen für weitere, wiegeunabhängige Aufgaben der Maschine können erfindungsgemäß dort untergebracht werden.

## Patentansprüche

1. Wägezelle (100) zum Einsetzen in eine zugehörige Aufnahmehalterung (200),
a) wobei die Aufnahmehalterung (200) zur Anordnung in einer für Wiegeaufgaben bestimmten Maschine vorsehbar ist, und
b) wobei die Wägezelle (100) Ausrichtelemente (104, 105, 106) aufweist, die zum Zusammenwirken mit Ausrichtelementen (204, 205, 206) der Aufnahmehalterung (200) ausgebildet sind, und
c) wobei sich die Wägezelle (100) erstreckt in eine erste horizontale Richtung (X), eine dazu senkrechte zweite horizontale Richtung (Y) und eine zu beiden Richtungen (X, Y) senkrechte dritte Richtung (Z),
d) wobei die Wägezelle (100) zur Herstellung wenigstens einer lösbaren mechanischen und elektrischen Verbindung mit der Halterung (200) durch Einsetzen der Wägezelle (100) in die Halterung (200) ausgebildet ist und
e) wobei Ausrichtelemente (105, 106) der Wägezelle (100) jeweils wenigstens ein Anschlagmittel umfassen, welches im eingesetzten Zustand mit wenigstens einem dazu komplementär ausgebildeten Anschlagmittel der Ausrichtelemente (205, 206) der Aufnahmehalterung (200) zusammenwirkt, so dass die Wägezelle eine exakt vorgebbare Relativposition gegenüber der Aufnahmehalterung einnimmt,
dadurch gekennezeichnet, dass
f) die Wägezelle in der Aufnahmehalterung vorpositionierbar ist, wobei sie an einer Kontaktfläche der Aufnahmehalterung anliegt, welche als ein in Richtung (Z) wirkender Anschlag fungiert, und wobei sie bei weiterem Verschieben in Richtung (X) an einen in X-Richtung wirkenden Anschlag gelangt, und
g) die Ausrichtelemente (104, 204) der Wägezelle (100) und der Aufnahmehalterung (200) in Richtung (X) verlaufende, komplementär zueinander ausgebildete Führungselemente aufweisen, um die Wägezelle (100) beim Einsetzen in die Aufnahmehalterung (200) gegen ein Verdrehen und/oder seitliches Verschieben quer zur Richtung (X) zu sichern.

2. Wägezelle (100) nach Anspruch 1, **dadurch gekennzeichnet, dass** die Wägezelle (100) mit der Halterung (200) über wenigstens eine Schnellspannverbindung (210) lösbar verbindbar ist.

3. Wägezelle (100) nach einem der vorigen Ansprüche, **dadurch gekennzeichnet, dass** die Ausrichtelemente der Wägezelle (100) wenigstens ein Zentriermittel (117) umfassen, welches im eingesetzten Zustand mit einem dazu komplementär ausgebildeten Zentriermittel (217) der Aufnahmehalterung (200) zusammenwirkt, um die Lage der Wägezelle (100) relativ zur Aufnahmehalterung (200) in wenigstens einer Richtung festzulegen.

4. Wägezelle (100) nach einem der vorigen Ansprüche und Anspruch 2, **dadurch gekennzeichnet, dass** die Schnellspannvorrichtung (110) zur Ausbildung eine Spannkraft zwischen Wägezelle (100) und Aufnahmehalterung (200) in gleichzeitig wenigstens zwei Richtungen (X, Y, Z) vorgesehen ist, um die Wägezelle (100) in diesen Richtungen gegen die Halterung vorzuspannen.

5. Wägezelle (100) nach einem der vorigen Ansprüche, **dadurch gekennzeichnet, dass** die Wägezelle (100) wenigstens einen elektrischen Kontakt (118) zur Übertragung von Versorgungsspannung und/oder Signalen aufweist, der beim Einsetzen in die Halterung (200) mit einem dort komplementär ausgebildeten Kontakt (218) verbindbar ist, wobei der wenigstens eine elektrische Kontakt (118, 218) vorzugsweise als Federkontakt realisiert ist und/oder wobei der wenigstens eine Kontakt (118, 218) vorzugsweise im eingesetzten Zustand zum Schutz vor äußeren Einflüssen vollständig von Wägezelle (100) und Aufnahmehalterung (200) umschlossen wird.

6. Wägezelle (100) nach einem der vorigen Ansprüche, **dadurch gekennzeichnet, dass** die Wägezelle wenigstens einen weitgehend hermetisch getrennten Bereich (130, 140) aufweist, welcher zur Aufnahme der Wägezellenelektronik vorgesehen ist.

7. Aufnahmehalterung (200) für eine Wägezelle (100) nach einem der Ansprüche 1 bis 6, **dadurch gekennzeichnet, dass** eine mit der Wägezelle (100) zusammenwirkende elektrische oder mechanische Verriegelungsvorrichtung vorgesehen ist, um vorgebbare, über die Aufnahmehalterung (200) mit der Wägezelle (100) verbindbare elektrische Kontakte erst dann einzuschalten, wenn die Wägezelle (100) in die Halterung eingesetzt und/oder ein anderer vorgebbarer elektrischer, mechanischer und/oder elektromechanischer Kontakt zwischen Wägezelle (100) und Halterung zustande gekommen ist.

8. Aufnahmehalterung (200) für eine Wägezelle (100) nach einem der Ansprüche 1 bis 6, **dadurch gekennzeichnet, dass** die Aufnahmehalterung einen elektrischen Anschlussraum (240) zur Anordnung von elektrischen oder elektronischen Komponenten aufweist, welcher vorzugsweise zur Aufnahme von zur Wägezelle (100) zugehöriger Elektronik und/oder nicht-zugehöriger Elektronik ausgebildet ist.

9. Aufnahmehalterung (200) für eine Wägezelle (100) nach einem der Ansprüche 1 bis 6, **dadurch gekennzeichnet, dass** eine Schutzvorrichtung für mit der Wägezelle (100) verbindbare elektrische Kontakte der Aufnahmehalterung (200) vorgesehen ist, die bei Entnahme der Wägezelle (100) die Kontakte an der Aufnahmehalterung und/oder der Wägezelle (100) selbsttätig gegen Verschmutzung sichert.

10. Wägezelle (100) nach einem der Ansprüche 1 bis 6 mit zugehöriger Aufnahmehalterung (200) nach wenigstens einem der Ansprüche 7 bis 9.

11. Wägesystem, aufweisend eine Wägezelle (100) nach einem der Ansprüche 1 bis 6 und eine dazu komplementär ausgebildete Aufnahmehalterung (200) nach wenigstens einem der Ansprüche 7 bis 09.

12. Wägesystem nach Anspruch 11, **dadurch gekennzeichnet, dass** Wägezelle (100) und Aufnahmehalterung (200) beim Zusammensetzen wenigstens einen explosionsgeschützten Raum bilden.

13. Wägesystem nach Anspruch 12, **dadurch gekennzeichnet, dass** der explosionsgeschütze Raum gebildet wird, bevor eine vorgebbare elektrische Verbindung zwischen Wägezelle (100) und Aufnahmehalterung (200) zustande kommt.

## Claims

1. A weighing cell (100) for insertion into an associated receiving holder (200),
a) wherein the receiving holder (200) can be provided for arrangement in a machine intended for weighing tasks, and
b) wherein the weighing cell (100) has alignment elements (104, 105, 106) that are formed to cooperate with alignment elements (204, 205, 206) of the receiving holder (200), and
c) wherein the weighing cell (100) extends in a first horizontal direction (X), a second horizontal direction (Y) perpendicular thereto, and a third direction (Z) perpendicular to both directions (X, Y),
d) wherein the weighing cell (100) is formed to produce at least one releasable mechanical and electrical connection with the holder (200) by inserting the weighing cell (100) into the holder (200), and
e) wherein alignment elements (105, 106) of the weighing cell (100) in each case comprise at least one stop means which in the inserted state cooperates with at least one stop means that is formed in a manner complementary thereto and pertains to the alignment elements (205, 206) of the receiving holder (200) so that the weighing cell occupies an exactly predeterminable relative position with respect to the receiving holder, **characterised in that**
f) the weighing cell can be pre-positioned in the receiving holder, wherein it rests against a contact face of the receiving holder that functions as a stop acting in the direction (Z), and wherein upon further displacement in the direction (X) it reaches a stop acting in the X-direction, and
g) the alignment elements (104, 204) of the weighing cell (100) and of the receiving holder (200) have guide elements that run in the direction (X) and are formed so as to be complementary to each other in order to secure the weighing cell (100) upon insertion into the receiving holder (200) against twisting and/or lateral displacement transversely to the direction (X).

2. A weighing cell (100) according to claim 1, **characterised in that** the weighing cell (100) can be releasably connected to the holder (200) by way of at least one quick-action clamping connection (210).

3. A weighing cell (100) according to one of the previous claims, **characterised in that** the alignment elements of the weighing cell (100) comprise at least one centering means (117) which in the inserted state cooperates with a centering means (217) that is formed in a manner complementary thereto and pertains to the receiving holder (200) in order to fix the position of the weighing cell (100) relative to the receiving holder (200) in at least one direction.

4. A weighing cell (100) according to one of the previous claims and claim 2, **characterised in that** the quick-action clamping device (110) is provided to form a clamping force between the weighing cell (100) and receiving holder (200) in simultaneously at least two directions (X, Y, Z) in order to pre-tension the weighing cell (100) in these directions against the holder.

5. A weighing cell (100) according to one of the previous claims, **characterised in that** the weighing cell (100) has at least one electrical contact (118) for the transmission of supply voltage and/or signals which upon insertion into the holder (200) can be connected to a contact (218) that is formed in a complementary manner there, wherein the at least one electrical contact (118, 218) is preferably realized as a spring contact and/or wherein the at least one contact (118, 218) is preferably completely surrounded by the weighing cell (100) and receiving holder (200) in the inserted state for protection from external influences.

6. A weighing cell (100) according to one of the previous claims, **characterised in that** the weighing cell has at least one largely hermetically separated region (130, 140) which is provided to receive the weighing-cell electronics.

7. A receiving holder (200) for a weighing cell (100) according to one of claims 1 to 6, **characterised in that** an electrical or mechanical locking device that cooperates with the weighing cell (100) is provided in order to switch on predeterminable electrical contacts, which can be connected to the weighing cell (100) by way of the receiving holder (200), only when the weighing cell (100) is inserted into the holder and/or another predeterminable electrical, mechanical and/or electromechanical contact has been made between the weighing cell (100) and holder.

8. A receiving holder (200) for a weighing cell (100) according to one of claims 1 to 6, **characterised in that** the receiving holder has an electrical connection space (240) for the arrangement of electrical or electronic components which is preferably formed to receive electronics associated with the weighing cell (100) and/or non-associated electronics.

9. A receiving holder (200) for a weighing cell (100) according to one of claims 1 to 6, **characterised in that** provided for electrical contacts of the receiving holder (200) that are connectable to the weighing cell (100) there is a protective device which upon removal of the weighing cell (100) automatically protects the contacts on the receiving holder and/or the weighing cell (100) against contamination.

10. A weighing cell (100) according to one of claims 1 to 6 with an associated receiving holder (200) according to at least one of claims 7 to 9.

11. A weighing system, having a weighing cell (100) according to one of claims 1 to 6 and a receiving holder (200) formed in a manner complementary thereto according to at least one of claims 7 to 9.

12. A weighing system according to claim 11, **characterised in that** the weighing cell (100) and receiving holder (200) when put together form at least one explosion-proof space.

13. A weighing system according to claim 12, **characterised in that** the explosion-proof space is formed before a predeterminable electrical connection is made between the weighing cell (100) and receiving holder (200).

## Revendications

1. Cellule de pesée (100) destinée à être insérée dans un support de logement (200) correspondant,
a) le support de logement (200) pouvant être conçu pour une disposition dans une machine destinée à des tâches de pesée, et
b) la cellule de pesée (100) comprenant des éléments d'orientation (104, 105, 106), qui sont conçus pour une interaction avec des éléments d'orientation (204, 205, 206) du support de logement (200), et
c) la cellule de pesée (100) s'étend dans une première direction horizontale (X), une deuxième direction horizontale (Y) perpendiculaire à celle-ci et une troisième direction (Z) perpendiculaire aux deux directions (X, Y),
d) la cellule de pesée (100) étant conçue pour l'établissement d'une liaison amovible mécanique et électrique avec le support (200) par une insertion de la cellule de pesée (100) dans le support (200) et
e) les éléments d'orientation (105, 106) de la cellule de pesée (100) comprenant chacun un moyen de butée, qui interagit, dans l'état inséré, avec au moins un moyen de butée complémentaire des éléments d'orientation (205, 206) du support de logement (200), de façon à ce que la cellule de pesée adopte une position, pouvant être déterminée de manière précise, par rapport au support de logement, **caractérisée en ce que**
f) la cellule de pesée peut être pré-positionnée dans le support de logement, moyennant quoi elle s'appuie contre une surface de contact du support de logement, qui fonctionne comme une butée agissant dans la direction (Z) et arrivant, lors d'un déplacement supplémentaire dans la direction (X), contre une butée agissant dans la direction X, et
g) les éléments d'orientation (104, 204) de la cellule de pesée (100) et du support de logement (200) comprenant des éléments de guidage s'étendant dans la direction (X) et conçus de manière complémentaires entre eux, afin de sécuriser la cellule de pesée (100) lors de l'insertion dans le support de logement (200) contre une rotation et/ou un déplacement latéral transversalement par rapport à la direction (X).

2. Cellule de pesée (100) selon la revendication 1, **caractérisée en ce que** la cellule de pesée (100) peut être reliée de manière amovible avec le support (200) par l'intermédiaire d'au moins une liaison à serrage rapide (210).

3. Cellule de pesée (100) selon l'une des revendications précédentes, **caractérisée en ce que** les éléments d'orientation de la cellule de pesée (100) comprennent au moins un moyen de centrage (117) qui, dans l'état inséré, interagit avec un moyen de centrage (217) du support de logement (200), conçu de manière complémentaire à celui-ci, afin de fixer la position de la cellule de pesée (100) par rapport au support de logement (200) dans au moins une direction.

4. Cellule de pesée (100) selon l'une des revendications précédentes et la revendication 2, **caractérisée en ce que** le dispositif de serrage rapide (110) est prévu pour l'application d'une force de serrage entre la cellule de pesée (100) et le support de logement (200) dans simultanément au moins deux directions (X, Y, Z) afin de pré-serrer la cellule de pesée (100) dans ces directions contre le support.

5. Cellule de pesée (100) selon l'une des revendications précédentes, **caractérisée en ce que** la cellule de pesée (100) comprend au moins un contact électrique (118) pour la transmission d'une tension d'alimentation et/ou de signaux, qui, lors de l'insertion dans le support (200), peut être relié avec un contact (218) conçu de manière complémentaire, l'au moins un contact électrique (118, 218) étant conçu de préférence comme un contact à ressort et/ou l'au moins un contact (118, 218) étant entourée, dans l'état inséré, pour la protection contre les conditions extérieures, entièrement par la cellule de pesée (100) et le support de logement (200).

6. Cellule de pesée (100) selon l'une des revendications précédentes, **caractérisée en ce que** la cellule de pesée comprend une zone (130, 140) séparée de manière largement hermétique, qui est conçue pour le logement de l'électronique de la cellule de pesée.

7. Support de logement (200) pour une cellule de pesée (100) selon l'une des revendications 1 à 6, **caractérisé en ce qu'**un dispositif de verrouillage électrique ou mécanique, interagissant avec la cellule de pesée (100), est prévu pour n'activer des contacts électriques, pouvant être reliés avec la cellule de pesée (100) par l'intermédiaire du support de logement (200), que lorsque la cellule de pesée (100) est insérée dans le support et/ou lorsqu'un autre contact électrique, mécanique et/ou électromécanique entre la cellule de pesée (100) et le support a été établi.

8. Support de logement (200) pour une cellule de pesée (100) selon l'une des revendications 1 à 6, **caractérisé en ce que** le support de logement comprend un espace de logement électrique (240) pour la disposition de composants électriques ou électroniques, qui est conçu de préférence pour le logement d'une électronique appartenant et/ou d'une électronique n'appartenant pas à la cellule de pesée (100).

9. Support de logement (200) pour une cellule de pesée (100) selon l'une des revendications 1 à 6, **caractérisé en ce qu'**un dispositif de protection est prévu pour des contacts électriques du support de logement (200) pouvant être reliés à la cellule de pesée (100), qui, lors du retrait de la cellule de pesée (100), protège les contacts au niveau du support de logement et/ou de la cellule de pesée (100) automatiquement contre l'encrassement.

10. Cellule de pesée (100) selon l'une des revendications 1 à 6, avec un support de logement (200) correspondant selon au moins l'une des revendications 7 à 9.

11. Système de pesée comprenant une cellule de pesée (100) selon l'une des revendications 1 à 6 et un support de logement (200), conçu de manière complémentaire à celle-ci, selon au moins l'une des revendications 7 à 9.

12. Système de pesée selon la revendication 11, **caractérisé en ce que** la cellule de pesée (100) et le support de logement (200) forment, lors de l'assemblage, une chambre protégée contre les explosions.

13. Système de pesée selon la revendication 12, **caractérisé en ce que** la chambre protégée contre les explosions est formée avant qu'une liaison électrique soit établie entre la cellule de pesée (100) et le support de logement (200).
